(19) Europäisches Patentamt / European Patent Office / Office européen des brevets

(11) **EP 2 169 421 B1**

(12) **FASCICULE DE BREVET EUROPEEN**

(45) Date de publication et mention
de la délivrance du brevet:
**25.02.2015 Bulletin 2015/09**

(51) Int Cl.:
***G01S 5/16*** (2006.01)

(21) Numéro de dépôt: **09171241.4**

(22) Date de dépôt: **24.09.2009**

(54) **Système de détection optique de position et/ou d'orientation d'objets comprenant au moins deux capteurs coplanaires**

System zur optischen Erfassung der Position und/oder Ausrichtung von Objekten, das mindestens zwei koplanare Sensoren umfasst

System for optical detection of the position and/or orientation of objects comprising at least two coplanar sensors

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805318**

(43) Date de publication de la demande:
**31.03.2010 Bulletin 2010/13**

(73) Titulaire: **Thales**
**92200 Neuilly Sur Seine (FR)**

(72) Inventeurs:
• **Barbier, Bruno**
**33000 Bordeaux (FR)**
• **Rouzes, Siegfried**
**33185 Le Haillan (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 905 455      FR-A- 2 905 456**
**FR-A- 2 920 546      US-A- 5 617 335**
**US-A- 5 974 365**

• **WANG ET AL: "EM enhancement of 3D head pose estimated by point at infinity" IMAGE AND VISION COMPUTING, GUILDFORD, GB, vol. 25, no. 12, 1 septembre 2007 (2007-09-01), pages 1864-1874, XP022227807 ISSN: 0262-8856**

**EP 2 169 421 B1**

## Description

La présente invention concerne le domaine des dispositifs de détection optique de position et d'orientation d'objets dans l'espace. Elle s'applique plus particulièrement dans le domaine aéronautique où dans ce cas l'objet détecté est un casque de pilote.

La détermination du positionnement d'un point dans l'espace et la détermination de l'attitude d'un objet quelconque sont des problèmes concernant de nombreux domaines techniques.

Les différentes solutions généralement apportées doivent lever toute ambiguïté de position ou d'attitude, répondre à une dynamique plus ou moins sévère des systèmes et satisfaire une précision élevée, en particulier dans le domaine aéronautique.

Dans les systèmes de détection de position et d'attitude d'objets dans l'espace répondant à une précision de quelques millimètres en position et au degré en attitude, de nombreuses applications existent dans différents domaines.

Ces systèmes sont utilisés en aéronautique, pour la détection de posture de tête, notamment pour les casques d'avions d'arme, d'hélicoptères militaires, civils ou para-civils. Dans ce dernier cas d'application para-civiles, il peut s'agir de missions de sauvetage en mer par exemple. Ils sont utilisés également pour la détection de casques de simulation, cette détection peut alors être combinée à un dispositif d'oculométrie, également appelé eyetracker, pour la détection de position du regard. Dans le domaine de la réalité virtuelle et des jeux, il existe également de nombreuses applications de ces systèmes.

Plus généralement, dans le domaine de la détection de posture générique, il existe également de nombreuses applications, notamment dans le domaine médical pour les opérations à distance et le contrôle d'instruments, dans le domaine du contrôle de position pour des machines outils asservies ou de la commande à distance et enfin pour le cinéma, afin de reproduire les mouvements en images de synthèse.

Ces différentes applications ont des solutions techniques répondant à des exigences plus ou moins contraignantes.

Concernant des applications à faibles contraintes, notamment en terme de précisions, il existe différents systèmes de détection de position et/ou d'orientation d'objets.

Par exemple, les dispositifs à reconnaissance de patchs ou de formes par caméras utilisent des dessins imprimés sur un objet. Plusieurs caméras observent la scène et déterminent la configuration spatiale du dessin observé.

Il existe également des dispositifs à reconnaissance de sphères par caméras, qui sont utilisés, par exemple au cinéma, pour la reconstitution du mouvement humain. Le dispositif utilise plusieurs caméras qui observent des sphères réfléchissantes et déterminent leur trajectoire.

Enfin il existe des dispositifs de positionnement à ultrasons reposant sur le principe de triangulation entre émetteurs et récepteurs ultrasoniques.

Concernant des applications plus performantes, en particulier dans le domaine aéronautique, les dispositifs de détection de posture de casques dans les aéronefs utilisent deux principales techniques qui sont la détection de posture électromagnétique et la détection de posture électro-optique.

La détection de posture électromagnétique nécessite des dispositifs comprenant des moyens d'émission d'un champ électromagnétique et des capteurs de réception sur le casque permettant de déterminer leur position par rapport à l'émetteur.

La détection de posture électro-optique nécessite généralement des motifs de diodes électroluminescentes, encore appelé LEDs, disposés sur le casque et plusieurs capteurs de type caméras montés dans le cockpit permettant de déterminer la configuration spatiale d'un motif de LEDs.

Pour améliorer les performances, il est fréquent de combiner d'autres dispositifs comprenant des capteurs de types gyroscopiques, accéléro-métriques ou magnéto-métriques. Cette hybridation de capteurs permet d'améliorer les performances dynamiques ou de lever une ambiguïté d'orientation. Ces capteurs ne modifient pas les performances statiques de positionnement des dispositifs de détection cités précédemment.

Néanmoins, ces solutions présentent un certain nombre d'inconvénients et de limitations, particulièrement dans le domaine aéronautique.

En ce qui concerne les dispositifs électro-optiques, la cartographie du cockpit ou plus généralement la topologie de la zone contenant l'objet doit être connue. Dans l'aéronautique, cette topologie peut subir des déformations ou être difficile à cartographier.

Par ailleurs, ces mêmes dispositifs nécessitent plusieurs caméras et plusieurs capteurs. Les calculs de position demandent de nombreuses ressources et l'analyse temps réel est complexe à mettre en oeuvre.

De plus, la diffusion dans la zone de détection de la lumière des LEDs ne permet pas de s'affranchir complètement des perturbations de l'environnement lumineux du cockpit dues au soleil ou à des réflexions parasites sur la verrière.

En ce qui concerne les dispositifs de détection de posture électromagnétique, des solutions robustes sont difficiles à mettre en oeuvre.

En particulier, dans le domaine aéronautique, les rayonnements parasites et les perturbations électromagnétiques peuvent dégrader les performances des systèmes existants.

Une solution mettant en oeuvre un dispositif de type électro-optique tel que décrit dans le brevet FR 2 905 455 permet de s'affranchir des inconvénients des dispositifs électromagnétiques.

D'autre part, cette solution utilise préférentiellement des moyens de projection d'images du type vidéo-projecteur holographique.

En particulier, les vidéo-projecteurs holographiques monochromatiques ont les avantages d'émettre dans une bande de fréquences très étroite, une image nette dans un large champ et de permettre de concentrer une forte énergie dans une zone très faible. On peut très facilement discriminer les signaux issus du vidéo-projecteur holographique de la lumière parasite.

Plus précisément, cette solution, comprend des capteurs électro-optiques disposés sur l'objet et répartis en groupe, appelé cluster, des moyens d'analyse et de calcul permettant de retrouver la position et/ou l'attitude de l'objet, des moyens électroniques de génération d'images et des moyens de projection optiques comprenant un afficheur et une optique de projection.

Les moyens de projection optique émettent dans un cône de projection une image nette en tout point de la zone de débattement dans laquelle peut se déplacer l'objet. L'analyse des portions d'images reçues par les capteurs d'au moins un cluster permet de repérer la position et/ou l'attitude de l'objet dans le repère défini par les moyens de projection, celui-ci étant constitué d'un plan perpendiculaire à l'axe de projection, dit plan-image, et de l'axe de projection.

Enfin, cette solution couplée à celle décrite dans le brevet FR 07 06132 permet de définir des clusters dont les propriétés géométriques sont notamment des capteurs linéaires disposés en parallélogramme, donc coplanaires, sur l'objet dont la détermination du mouvement est recherchée.

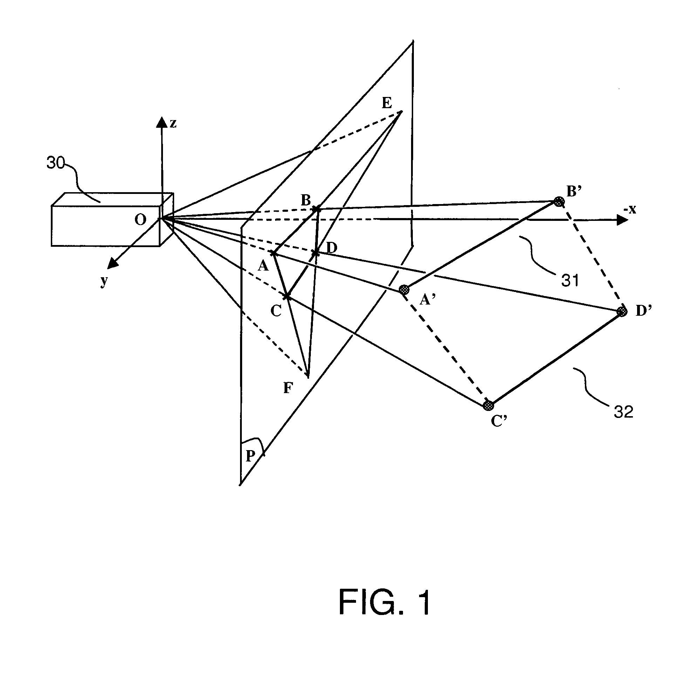

La figure 1 représente un projecteur 1 fixe dans un repère (0, x, y, z) de l'art antérieur, projetant des mires sur des capteurs 31, 32 disposés parallèlement sur une partie mobile non représentée. Les extrémités A'et B' du capteur 31 et les extrémités C' et D' du capteur 32 sont les images des points $A_0$, $B_0$, $C_0$, $D_0$ des capteurs 31 et 32 avant d'avoir subi une translation et une rotation dans l'espace. Les projetés dans le plan image A, B, C et D forment un quadrilatère dont on détermine les points de fuite E et F aux intersections des droites (AB) et (CD) d'une part et d'autre par des droites (AC) et (BD). Le calcul des points E et F permettant de déterminer simplement la rotation et la translation analytiquement.

Un inconvénient d'un tel capteur est la contrainte de positionnement relatif imposée aux capteurs linéaires. En effet, le positionnement sur la partie mobile des capteurs est tel qu'ils doivent former un parallélogramme.

Par ailleurs, dans la solution décrite dans le brevet FR 07 06132, le calcul des points de fuite nécessite de calculer une intersection de droites projetées dans le plan image.

L'invention propose de résoudre ces problèmes notamment en disposant de capteurs linéaires positionnés dans le repère d'une partie mobile dont on cherche à déterminer la posture et la cinématique, tel qu'un casque de pilote.

La présente invention permet, à partir d'au moins deux capteurs linéaires positionnés dans un même plan, de déterminer la posture de l'objet par un calcul de la position de deux triplets de points de chaque capteurs projetés dans le plan image.

L'invention permet cette détermination à partir d'une partie fixe projetant dans une zone comprenant les capteurs des mires dont les motifs comprennent au moins deux réseaux sécants d'au moins trois segments parallèles.

Avantageusement, le système électro-optique de détermination de position et d'orientation d'une partie mobile comprend :

- une partie fixe comprenant des moyens de projections et ayant un centre de projection (O) et ;
- une partie mobile ;

la partie fixe étant liée solidairement à un plan image virtuel, la partie mobile étant liée solidairement à au-moins deux dispositifs électro-optiques linéaires, les moyens de projection projetant dans une zone comprenant les dispositifs électro-optiques, au moins deux réseaux de faisceaux, dont l'intersection avec le plan image définit au moins deux réseaux de droites non parallèles, chacun des réseaux de droites comprenant au moins trois segments parallèles, chacun des dispositifs électro-optique étant intercepté en au moins deux triplets de points.

Avantageusement, les deux dispositifs électro-optiques étant coplanaires et leur direction sécante, l'orientation et la position de la partie mobile est déterminée en fonction des points de fuite dans le plan image des deux droites comprenant respectivement le premier et le second dispositifs électro-optiques, des moyens de calcul permettant, à partir des points d'intersections des faisceaux sur les dispositifs électro-optiques, de déterminer les positions :

■ des projections sur le plan image d'un premier triplet de points dont les positions sont connues dans un référentiel lié au premier dispositif et ;

■ des projections sur le plan image d'un second triplet de points dont les positions sont connues dans un référentiel lié au second dispositif ;

■ des points de fuite dans le plan image.

Avantageusement, le système électro-optique de détermination de position et d'orientation d'une partie mobile comprend des moyens de détermination d'au moins une direction de ladite partie mobile.

Avantageusement, le premier réseau intercepte le premier dispositif électro-optique en trois points ($A_1$, $B_1$, $C_1$) et le second réseau intercepte le dispositif électro-optique en trois autres points ($A_2$, $B_2$, $C_2$), les deux réseaux faisant un angle entre eux de telle manière que la forme des deux réseaux représente une ligne brisée formant au moins trois dents de scie.

Avantageusement, le système projette successivement deux mires, dont la projection comprend respectivement un premier et un second réseau ayant les mêmes caractéristiques dont l'orientation du second réseau par rapport au premier réseau forme un angle déterminé, les réseaux ayant une taille suffisante pour couvrir la zone de débattement du capteur et comprenant un nombre déterminé de segments parallèles, dont les birapports de quatre points d'intersection consécutifs avec une droite sécante sont tous différents.

Avantageusement, le premier triplet de points comprend les extrémités et le centre du premier dispositif électro-optique et que le second triplet de points comprend les extrémités et le centre du second dispositif électro-optique.

Avantageusement, les dispositifs électro-optiques sont des barrettes de photo détection.

Avantageusement, les dispositifs électro-optiques sont des capteurs linéaires CCD, la partie fixe est un projecteur d'images animées et l'objet mobile est un casque de pilote.

Avantageusement, la translation t dans un repère fixe (O, i, j, k) est déterminée par la relation : $\vec{t} = k\overrightarrow{OA} - r(\overrightarrow{OA_0})$, où O est le point de référence de la partie fixe, A le projeté, par projection de centre O, dans le plan image d'un point A' connu par mesure du premier dispositif électro-optique dont la position initiale connue est notée $A_0$ et k s'exprimant de la manière suivante : $k = \left| \mu - 1 \right| \dfrac{A'B'}{OE}$, où E est le point de fuite, par projection de centre 0 sur le plan image, de la direction du premier dispositif électro-optique et B' est un second point connu par mesure du premier dispositif électro-optique linéaire dont la projection calculée est B, $\mu$ est un réel s'exprimant de la manière suivante :

$$\overrightarrow{AE} = \mu \overrightarrow{AB} \ .$$

Avantageusement, la rotation r dans un repère fixe (O, i, j, k) est déterminée par les relations :

$$r(\vec{j}) = -\frac{\vec{e}}{\|\vec{e}\|} \ ;$$

$$r(\vec{k}) = \frac{1}{\tan\alpha} r(\vec{j}) - \frac{1}{\sin\alpha} \frac{\vec{f}}{\|\vec{f}\|} \ ;$$

$$r(\vec{i}) = r(\vec{j}) \wedge r(\vec{k}) \ ;$$

où $\vec{e}$ est le vecteur unitaire ayant pour orientation $\overrightarrow{OE}$, où E est le point de fuite de la direction du premier dispositif électro-optique ;

où $\alpha$ est l'angle formé entre les deux dispositifs électro-optiques sur la partie mobile, et ;

où $\vec{f}$ est le vecteur unitaire ayant pour orientation $\overrightarrow{OF}$, où F le point de fuite de la direction du second dispositif électro-optique.

D'autres caractéristiques et avantages de l'invention apparaîtront à l'aide de la description qui suit, faite en regard des dessins annexés qui représentent :

• la figure 1 : un dispositif de l'art antérieur comprenant une partie mobile disposant de capteurs linéaires formant un parallélogramme.

- la figure 2 : un premier exemple de la projection sur le plan image de mires projetées sur un capteur formant un réseau de droites parallèles ;
- la figure 3 : un second exemple de la projection sur le plan image de mires projetées sur un capteur linéaire formant des dents ;
- la figure 4 : une disposition selon l'invention de deux capteurs linéaires dans un même plan orientés l'un par rapport à l'autre d'un angle non nul ;
- la figure 5 : un exemple de calcul des points de fuite des projetés de points des capteurs selon l'invention ;

Un principe de l'invention concerne la détermination de la posture et de la cinématique d'une partie mobile dans l'espace à partir d'une partie fixe comprenant un projecteur d'images. La partie mobile comprend des capteurs et la partie fixe comprend des moyens de projections de mires.

Les mires sont projetées dans une zone de l'espace comprenant les capteurs. Les mires comprennent des motifs interceptant les capteurs.

L'efficacité d'un tel système de détection de mouvement d'une partie mobile repose sur la forme, le nombre et la disposition des capteurs sur la partie mobile, par ailleurs elle repose sur la netteté des images projetés, de la forme et de la luminosité des mires projetées.

Un projecteur optique d'images laser est constitué, dans un mode de réalisation de l'invention :

■ d'un générateur de faisceau laser de puissance fixe, telle qu'une diode laser et collimaté, c'est à dire peu divergent de façon à assurer une grande profondeur de champ ;
■ d'un dispositif de déviation angulaire du faisceau laser à deux axes perpendiculaires entre eux qui définissent l'orientation du plan de projection Pi, appelé plan image et le centre de projection O,
■ et éventuellement d'un objectif d'expansion angulaire, dont l'axe optique est perpendiculaire aux deux axes du déviateur, qui amplifie la déviation angulaire du faisceau et qui, préférentiellement, focalise le rayonnement à une distance proche de celle où sont positionnées les capteurs, les capteurs pouvant être par exemple de type barrettes de photo-détecteurs ;
■ d'un dispositif d'analyse des signaux issus de chaque barrette
■ d'un générateur de signaux alimentant le projecteur de façon à ce que l'image projetée et interceptée par chaque capteur permette de déterminer par la suite la position de la projection dans le plan de projection Pi de tout point de position connue sur le capteur.
Par exemple, des points remarquables sont les extrémités du capteur, ainsi que son milieu. La forme des signaux peut, par exemple, consister en six faisceaux plans d'orientation connues générant six points d'impact sur chaque capteur, impacts dont les positions dépendent de l'orientation du capteur par rapport au repère fixe du projecteur.
Le dispositif d'analyse des signaux peut, éventuellement, rétroagir sur la forme des signaux de commande du projecteur pour optimiser la forme des signaux images en fonction des signaux reçus des capteurs. Par exemple, le centrage ou l'amplitude angulaires de l'image projetée peuvent être ajustés.

D'autres caractéristiques peuvent être prises en compte dans un tel système notamment au regard des descriptions des deux demandes de brevets publiées suivantes :

■ La demande de brevet FR 2 905 456, détaillant le principe GHOST selon lequel un projecteur holographique d'images permet de connaître le mouvement d'un objet comportant un certain nombre de capteurs formant des clusters.
■ La demande de brevet FR 2 905 455, détaillant un procédé de détection de l'orientation et de la position d'un objet dans l'espace, tel qu'un casque de pilote, dont la disposition des capteurs sur l'objet peut former des parallélogrammes.

Un dernier principe pré-requis à la compréhension de la présente invention repose sur un procédé de détection des extrémités d'un capteur linéaire dans l'espace par projections de mires. Ce principe est énoncé dans la demande de brevet FR 0 706 132.

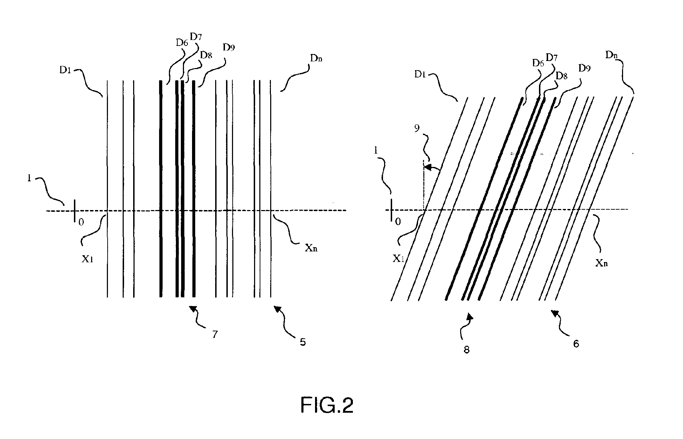

Ce dernier principe est détaillé à nouveau dans la présente description dans les figures 1 et 2. Ce principe est utilisé dans la présente invention, notamment pour calculer la position de la projection dans un plan image de tout point de la droite comprenant le capteur linéaire à partir du moment où la position du point est repérée et connue dans le référentiel du capteur linéaire.

Néanmoins, une partie des raisonnements géométriques s'effectuent dans le plan image par la considération de la position de points projetés et par la conservation, après projection, des bi-rapports issus des motifs des mires projetées sur les capteurs. Une propriété des motifs des mires projetées est notamment de comporter deux réseaux sécants d'au moins trois segments parallèles.

Aussi ce qui suit est organisé de la manière suivante :

■ Dans un premier temps, la présente description comprend un rappel du procédé de la détermination d'un point, sur le plan image d'un projecteur, issue de la projection d'un point d'un capteur illuminé par une mire dont les motifs sont connus. Ce dernier rappel précise notamment, à partir de la conservation des bi-rapports dans une projection centrale, comment les positions des projetées des extrémités d'un capteur peuvent être calculées.
■ Dans un second temps, le système de l'invention est décrit ainsi que l'application du procédé précédemment décrit pour le calcul de la positon dans le plan image d'un point de fuite d'une droite de l'espace.

Procédé de la détermination des projetés des extrémités d'un capteur.

Ce principe permet, à partir de moyens de projection, projetant une image nette dans une zone déterminée comprenant au moins un capteur linéaire, de connaître les extrémités du capteur fixé sur un objet, les extrémités étant repérées dans le plan image.

La connaissance des extrémités de la projection de deux capteurs linéaires nous permet de connaître la posture d'un objet lié solidairement aux deux capteurs, à la condition que les deux capteurs ne soient pas colinéaires.

Ce principe comprend différentes étapes de construction du lieu des extrémités d'un capteur linéaire dans le plan image de l'image projetée, le capteur étant situé dans un plan de l'espace.

Le principe consiste à projeter une mire dans une zone de l'espace comprenant le capteur. L'image doit nécessairement être nette dans cette zone de l'espace. Une telle contrainte peut être résolue en utilisant par exemple un vidéo projecteur holographique tel que développé par « Light Blue Optics ».

La première étape du procédé, rappelé dans la présente description, comprend deux modes qui se différencient, d'une part, par la connaissance à priori de l'envergure de la zone dans laquelle se situe le capteur et d'autre part par le type de mires projetées en fonction de cette zone. Un premier mode correspond à une situation d'initialisation du procédé, la position du capteur n'étant pas connue dans l'espace, le champ de projection est donc large. Un second mode correspond à une situation d'asservissement du système, la position du capteur étant connue par une détection antérieure, les moyens de projection émettent une image selon une direction connue dans un champ plus étroit, dont la taille est de l'ordre de grandeur de la taille du capteur, le capteur se situant dans le champ. Ce dernier mode est appelé dans la suite le mode de « tracking » car la mire suit le capteur.

A l'initialisation du procédé, la non-connaissance de la position du capteur dans l'espace nécessite de considérer, par exemple, une famille de mires particulières couvrant une large zone couvrant la zone de débattement possible du capteur. Dans l'exemple d'une détection de casque dans un cockpit, le casque comprenant des capteurs linéaires, la zone de plus grande envergure couvre une large partie du cockpit.

Le second mode correspond à une détection alors qu'une position précédente du capteur est connue. Ce mode permet de définir une image plus petite que celle projetée dans le premier mode. Ce second mode utilise une autre famille de mires.

Dans les deux modes le procédé de détection, compte tenu des deux familles de mires, est identique. Le mode d'initialisation propose néanmoins un procédé de détection de la zone dans laquelle se situe le capteur comprenant une étape supplémentaire.

Le second mode permet un gain de précision dans les calculs notamment de la position de l'image du capteur dans le plan image. En outre, ce second mode permet d'émettre des mires dont la densité de lumière est plus importante dans les motifs émis que dans le premier mode, de ce fait la détection est plus efficace.

Ce second mode fonctionne généralement dans un mode asservi qui est initialisé par le premier mode.

Nous nommerons les mires utilisées dans le premier mode : des « mires générales », et les mires du second mode : des « mires de tracking ». Les deux familles de mires étant appelées dans la suite de la description des mires « GHOST ».

Les mires sont définies dans le plan image de l'image projetée. Généralement ce plan n'est pas parallèle au plan comprenant un capteur.

Un principe du procédé repose sur le fait que les informations lues sur le capteur, correspondants aux traces de la mire, permettent de calculer un invariant de projection centrale. Cette problématique est commune aux mires générales et aux mires de tracking.

Dans les deux modes, le principe de la détection des extrémités d'un capteur permet à partir de la connaissance de trois droites parallèles du réseau dans le plan image et de leur trace sur le capteur, de tracer dans le plan image une droite passant par chacune des extrémités de l'image du capteur dans le plan image.

Il est donc nécessaire de considérer deux réseaux de trois droites parallèles, les réseaux ne possédant pas les mêmes orientations, pour tracer deux droites passant par chacune des extrémités du capteur. Dans ce cas, le procédé permet de déduire les extrémités de l'image du capteur par construction des intersections des droites passant par lesdites extrémités. Cette construction est rendue possible car la projection d'une intersection de droites est l'intersection des projections des droites.

L'objectif des mires générales se distingue des mires de tracking par le fait que l'on ne connaît pas a priori le triplet de droites dont on lit la trace sur capteur, il faut donc pouvoir l'identifier. Dans ce contexte, le procédé permet de considérer un réseau de droites parallèles tel que tout quadruplet de droites successives du réseau définit un birapport unique. L'unicité du birapport d'un quadruplet définit un quadruplet unique et rend donc un triplet de droites interceptant le capteur identifiable. En pratique, cela peut s'avérer difficile à réaliser pour différentes raisons. Ainsi, le procédé s'applique également à un ensemble de plus de quatre droites. On peut envisager d'identifier de façon unique non pas un quadruplet, mais un quintuplet ou tout ensemble de N droites (N supérieur à 4). Pour un ensemble de N droites, le procédé s'applique à un espace plus étendu et permet de séparer au mieux les points et donc les groupes de droites.

On rappelle ci-dessous la définition d'un birapport de quatre points alignés.

Le birapport $B_R$ de quatre points A, B, C, D alignés est défini par la relation suivante :

$$B_R(A,B,C,D) = \frac{\overline{AC}}{\overline{BC}} \cdot \frac{\overline{BD}}{\overline{AD}} \; ; \quad \text{exprimé en valeur algébrique par la relation suivante :}$$

$$B_R(x1, x2, x3, x4) = \frac{x3-x1}{x3-x2} \cdot \frac{x4-x2}{x4-x1} \, , \quad \text{où x1, x2, x3 et x4 sont les abscisses des points A, B, C, D, celles-ci}$$

étant définies sur une droite contenant les points et ayant pour origine un point référence de la droite.

Ce principe de localisation par mires est appliqué à plusieurs capteurs ayant chacun une orientation différente.

Ainsi, pour un capteur donné, il est nécessaire de disposer de deux mires générales, de directions différentes et envoyées successivement, afin de trouver les deux extrémités du projeté d'un capteur dans le plan image.

Ainsi, constitue une mire générale tout réseau de droites parallèles au plan image tel que :

- le réseau est à la fois suffisamment étendu et suffisamment serré, pour assurer qu'il intercepte le capteur en au moins quatre points ;
- le réseau est partout suffisamment détendu pour que l'on puisse distinguer sans confusion possible sur le capteur les tâches correspondant respectivement à 2 droites adjacentes quelconques du réseau ;
- l'application qui envoie tout quadruplet de droites ou plus successives du réseau sur son birapport propre est une bijection, et cette bijection est suffisamment dispersive pour assurer que l'on peut toujours retrouver le quadruplet antécédent sans confusion possible.

La figure 2 représente un exemple deux de réseaux 5 et 6 envoyés successivement de deux mires générales, faisant un angle 9 entre eux. Les deux quadruplets 7 et 8 sont constitués des droites D6, D7, D8 D9 et possèdent un birapport unique. La détection des quatre points d'intersection de chaque réseau sur le capteur permet d'identifier une zone de plus faible envergure afin de projeter des mires de tracking telles que décrit dans la suite sur la figure 2. Par ailleurs, le procédé permet selon le procédé décrit par la suite à partir des mires de tracking de construire les extrémités de l'image du capteur dans le plan image. Il suffit de d'appliquer le procédé aux deux réseaux envoyés successivement et de considérer trois droites de chaque quadruplet de chaque réseau interceptant le capteur.

La durée entre deux projections de deux mires générales est nécessairement limitée de manière à ce que le capteur n'effectue pas un mouvement trop important dans l'espace lors de son déplacement.

Le procédé permet dans les deux modes précités de construire les extrémités de l'image du capteur dans le plan image à partir de deux réseaux projetés simultanément (cas des mires de tracking) ou successivement (cas des mires générales), les réseaux comprenant au moins trois droites (ou segments) parallèles dans le cas des mires de tracking et au moins quatre droites dans le cas des mires générales.

Le procédé permet d'envoyer deux réseaux de trois droites, les réseaux n'étant pas parallèles, afin de retrouver les extrémités du projeté du capteur linéaire dans le plan image.

Dans le premier mode, les deux réseaux de droites, chacun constituant une mire générale, sont projetés successivement dans la zone comprenant le capteur. En revanche, dans le second mode, les deux réseaux de droites (ou segments) sont projetés dans une unique mire de tracking, c'est à dire en une seule image.

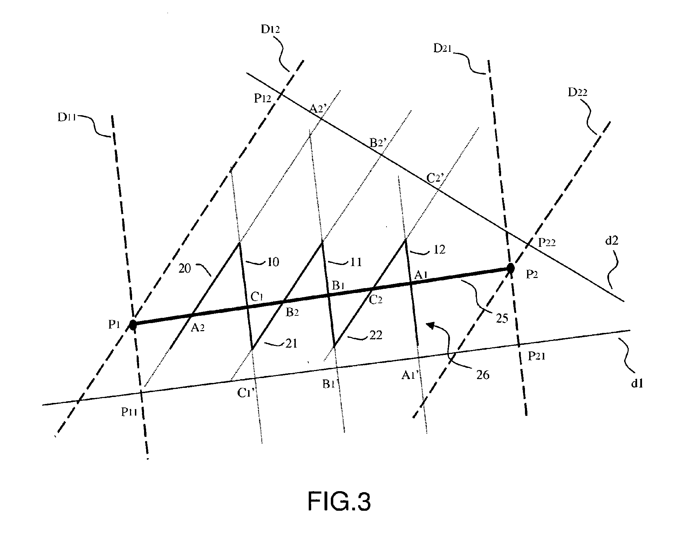

La figure 3 illustre une mire de tracking 26 dans le plan image de projection. Elle comprend un premier réseau de trois segments 10, 11 et 12 lumineux parallèles entre eux et un second réseau de trois segments 20, 21 et 22. Les deux réseaux projetés dans la même image simultanément ne sont pas parallèles et sont joints par les extrémités des segments. Dans l'exemple de la figure 3, ils sont joints par les extrémités supérieures de chaque segment formant une figure en dents de scie.

Dans la pratique, l'image constituée des segments lumineux se déforme dans la droite ou le plan comprenant le capteur, par une projection conique, lorsqu'elle intercepte le capteur linéaire, le plan du capteur et le plan de l'image projetée n'étant pas à priori parallèle. Le capteur détecte donc les points lumineux qui correspondent aux points d'intersection de l'image projetée avec le capteur. Le procédé considère l'image du capteur dans le plan de l'image projetée, l'image du capteur se déformant alors par la projection conique considérée ci-dessus, dans le plan image.

La figure 3 représente l'image 25 du capteur dans le plan image. Les birapports des distances entre les points d'intersection du capteur et des droites du réseau se conservent par la projection conique. L'image 25 du capteur comprend deux extrémités P1 et P2 dans le plan image qui ne sont pas connus à priori. La construction de leur position dans le plan image constituant le coeur du procédé. Par ailleurs, dans le plan image le premier réseau intercepte l'image 25 du capteur en trois points A1, B1 et C1, ces trois derniers points étant les projetés dans le plan image des points d'intersection du premier réseau avec le capteur. Le second réseau intercepte l'image 25 du capteur en trois autres points A2, B2 et C2, ces trois derniers points étant les projetés dans le plan image des points d'intersection du second réseau avec le capteur.

Le procédé décrit par la suite est valable également pour les mires générales et constitue la deuxième étape du procédé.

Si l'on considère le capteur dans l'espace, l'une des extrémités du capteur peut-être considérée comme l'origine d'un repère comprenant l'axe des abscisses porté par l'axe du capteur, on note alors $0, X_{A2}, X_{C1}, X_{B2}, X_{B1}, X_{C2}, X_{A1}, X_{max}$ les abscisses respectives des points d'intersection du premier et du second réseau avec le capteur ainsi que l'autre extrémité du capteur, leurs projetés dans le plan image étant respectivement les points P1, A2, C1, B2, B1, C2, A1 et P2 dans le plan du capteur.

Le procédé permet de considérer les birapports $k_{11}, k_{12}, k_{21}, k_{22}$ de quadruplets de points définis sur l'axe des abscisses de l'axe du capteur par les relations suivantes, $B_R$ étant le birapport de quatre points défini précédemment :

$$k_{11} = B_R(x_{A1}, x_{B1}, x_{C1}, 0) ;$$

$$k_{12} = B_R(x_{C1}, x_{B1}, x_{A1}, x_{max}) ;$$

$$k_{21} = B_R(x_{C2}, x_{B2}, x_{A2}, 0) ;$$

$$k_{22} = B_R(x_{A2}, x_{B2}, x_{C2}, x_{max}) ;$$

Enfin la troisième étape du procédé permet de construire les extrémités de l'image du capteur dans le plan image. Le but étant de trouver les extrémités de l'image du capteur dans le plan image, par construction selon la projection conique et conservation des birapports dans le plan du capteur et dans le plan image des quadruplets précédemment considérés, il est ensuite procédé au calcul de la position du capteur dans l'espace. Pour se faire, le procédé propose d'utiliser notamment la conservation des birapports de quatre points selon des projections coniques et cylindriques.

Concernant la projection conique relative à la projection de l'image sur le capteur, le procédé permet de considérer les birapports $k_{11}, k_{12}, k_{21}, k_{22}$ conservés par les projections conique des quadruplets des points définis précédemment sur le capteur, par les relations suivantes :

$$k_{11} = B_R(A1, B1, C1, P1) ;$$

$$k_{12} = B_R(C1, B1, A1, P2) ;$$

$$k_{21} = B_R(C2, B2, A2, P1) ;$$

$$k_{22} = B_R(A2, B2, C2, P2) ;$$

Le procédé propose en premier lieu de construire dans le plan image deux droites perpendiculaires à chaque réseau. La première droite d1 est perpendiculaire au premier réseau, elle est placée arbitrairement dans la partie inférieure de l'image. Les droites 10, 11 et 12 portant les segments lumineux du premier réseau interceptent la droite d1 en trois points A1', B1' et C1'. De la même manière, la seconde droite d2 est perpendiculaire au second réseau, elle est placée arbitrairement dans la partie supérieure de l'image. Les droites 20, 21 et 22 portant les segments lumineux du second réseau interceptent la droite d2 en trois points A2', B2' et C2'.

On cherche à déterminer les extrémités P1 et P2 de l'image du capteur dans le plan image. Chacun de ces points possède deux projetés sur les droites d1 et d2 selon l'axe parallèle respectivement au premier et au second réseaux. Notons P11 le projeté de P1 sur d1 selon l'axe du premier réseau et P12 le projeté de P1 sur d2 selon l'axe du second réseau. De manière analogue, notons P21 le projeté de P2 sur d1 selon l'axe du premier réseau et P22 le projeté de P2 sur d2 selon l'axe du second réseau.

Le procédé permet de considérer les birapports $k_{11}$, $k_{12}$, $k_{21}$, $k_{22}$ conservés par les projections cylindriques des quadruplets des points définis précédemment sur les droites d1 et d2, par les relations suivantes :

$$k_{11} = B_R(A1', B1', C1', P11) \; ;$$

$$k_{12} = B_R(C1', B1', A1', P21) \; ;$$

$$k_{21} = B_R(C2', B2', A2', P12) \; ;$$

$$k_{22} = B_R(A2', B2', C2', P22) \; ;$$

A partir de là on peut en déduire :

- le point P11 connaissant $k_{11}$ et A1', B1', C1';
- le point P12 connaissant $k_{12}$ et A1', B1', C1';
- le point P21 connaissant $k_{21}$ et A2 ', B2 ', C2';
- le point P22 connaissant $k_{22}$ et A2', B2',C2';

Puis, on peut construire dans le plan image les droites :

- D11 connaissant P11 et la direction de projection de projection selon l'axe du premier réseau ;
- D21 connaissant P21 et la direction de projection de projection selon l'axe du second réseau;
- D12 connaissant P12 et la direction de projection de projection selon l'axe du premier réseau;
- D22 connaissant P22 et la direction de projection de projection selon l'axe du second réseau;

Les deux directions étant connues par construction de la mire.

On obtient selon le procédé les deux extrémités de l'image du capteur dans le plan image par construction :

- P1 = D11 ∩ D12 ;
- P2 = D21 n D22.

Algébriquement, cette dernière opération en deux dimensions possède une solution à partir du moment ou les deux réseaux ne sont pas colinéaires. Par construction ils ne le sont pas pour les mires de tracking lorsqu'ils sont projetés sur une même image et ne le sont pas non plus lors de l'envoi successif de deux mires générales.

La démonstration est identique pour deux réseaux non parallèles envoyés successivement par la projection de mires générales. Le temps entre deux envois étant suffisamment court pour considérer que le capteur n'ait quasiment pas changé de position dans l'espace.

Application du principe à la présente invention

Le système selon l'invention permet d'utiliser ce dernier principe en considérant non plus les deux extrémités des capteurs mais n'importe quel point d'un premier capteur dont on connaît les abscisses dans le référentiel du capteur et les positions relatives de trois points d'un second

La partie mobile par rapport au repère fixe que constitue la partie fixe est équipée :

■ d'un premier dispositif électro-optique fixé sur la partie mobile ;

■ d'un deuxième dispositif électro-optique coplanaire au premier dispositif électro-optique et non parallèle.

Dans un mode de réalisation privilégié, la partie fixe est un projecteur d'images tel que décrit précédemment et les dispositifs électro-optique sont des barrettes de photo-détection.

La partie mobile peut-être un casque de pilote.

Un mode de fonctionnement de l'invention permet de disposer de faisceaux lumineux particuliers, tels que décrit précédemment, fournis par le projecteur déterminant des impacts lumineux sur les dispositifs électro-optiques.

L'analyse de la position de ces impacts sur les dispositifs électro-optiques au moyen des signaux électriques fournis par lesdits dispositifs, permet de calculer la position des projections virtuelles de centre 0 dans le plan image pour tout point de position donnée sur l'axe des dispositifs électro-optiques.

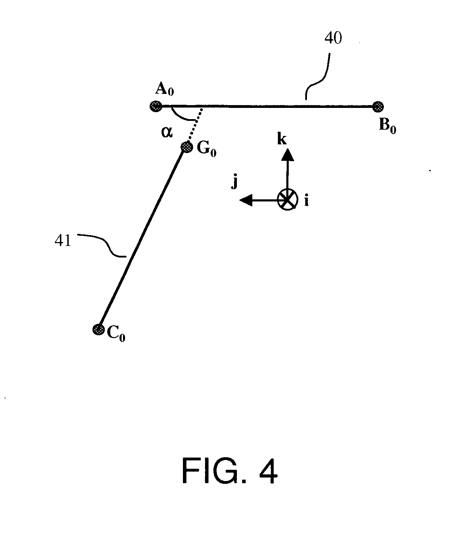

La figure 4 représente les deux dispositifs électro-optiques 40, 41 dans un même plan et positionnés dans un repère fixe de l'espace. Les extrémités $A_0$, $B_0$, $C_0$ et $G_0$ des deux dispositifs sont positionnés tel que $A_0$ est en position centrale du repère (O, i, j, k). Les deux axes des dispositifs électro-optiques 40, 41 forment un angle $\alpha$ fixe.

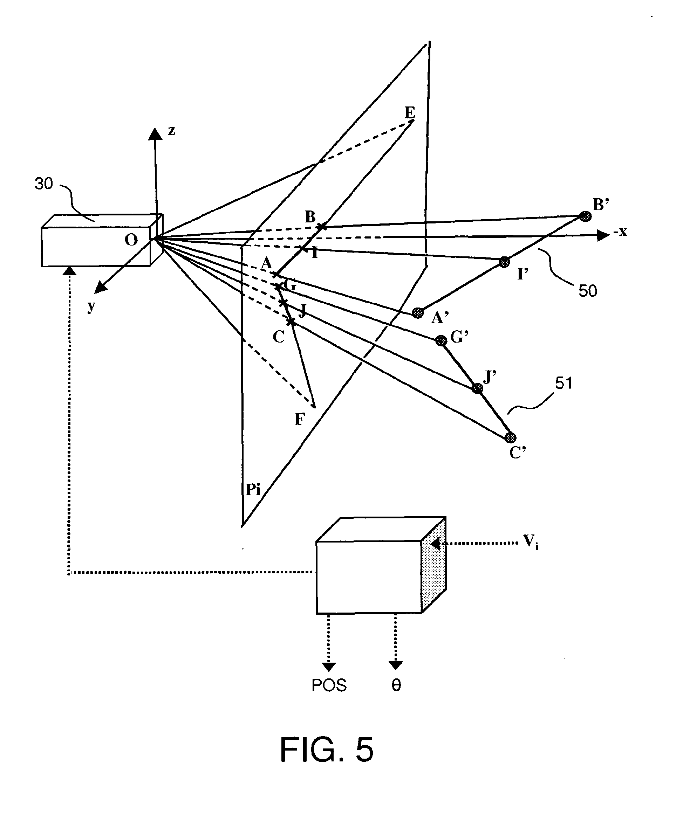

La figure 5 représente les deux dispositifs A'B' et G'C' liés solidairement à une partie mobile non représentée sur la figure. On nomme « I » le milieu du premier dispositif électro-optique et « J » le milieu du second dispositif électro-optique.

Un angle $\alpha$ non nul d'orientation entre les axes des deux dispositifs électro-optiques est déterminé par construction. Quels que soient les mouvements de la partie mobile, l'angle $\alpha$ entre les deux dispositifs fixés à ladite partie mobile reste constant.

En revanche, lors de la projection par la partie fixe d'une mire de type GHOST sur les dispositifs, seules les positions relatives des points des capteurs illuminés par la mire sont connues par mesures.

Les mesures sont effectuées à partir d'un dispositif électronique permettant à partir de tension $(V_i)_{i \in [1, n]}$ de connaître la position sur le capteur linéaire des pixels éclairés. La position des pixels étant repérée par leur abscisses $x_i$ sur le capteur.

Le principe précédemment rappelé nous permet d'obtenir, par exemple, le lieu des extrémités des projections des dispositifs dans le plan image.

Les calculs, détaillés dans la suite de la description, permettent de déduire alors la position POS et l'orientation $\Theta$ des capteurs dans l'espace par rapport à une position et une orientation initiales de la partie mobile.

Par exemple, les positions des projetés des extrémités A', B', G', C' et les milieux I', J' des dispositifs électro-optique dans le plan image peuvent être calculés. La position POS et l'orientation de la partie mobile sont entièrement déterminées par la position $\Theta$ des projections correspondantes A, B, I, G, C, J, sur le plan image Pi fixe connu.

Pour cela, on se place dans un repère de référence, d'origine O ; le plan image est par exemple le plan d'équation x = -1.

Par principe, une mire GHOST (d'initialisation ou de tracking) comprend au moins deux réseaux de trois droites parallèles. Les équations des droites de la figure 2, connues dans le plan image, peuvent prendre la forme suivante :

$$y \sin \Theta 1 - z \cos \Theta 1 = c_{11} ;$$

$$y \sin \Theta 1 - z \cos \Theta 1 = c_{12} ;$$

$$y \sin \Theta 1 - z \cos \Theta 1 = c_{13} ;$$

où $\Theta 1$ est l'angle que forme chacun des segments d'un premier réseau de droites parallèles avec le capteur dans le plan image,

$$y \sin \Theta 2 - z \cos \Theta 2 = c_{21} ;$$

$$y \sin \Theta 2 - z \cos \Theta 2 = c_{22} ;$$

$$y \sin \Theta 2 - z \cos \Theta 2 = c_{23} ;$$

où Θ2 est l'angle que forme chacun des segments d'un second réseau de droites parallèles avec le capteur dans le plan image.

Les plans de projection de ces droites coupent le capteur considéré en six points d'abscisses mesurées et identifiées notées pour un capteur donné : $a_{11}$, $a_{21}$, $a_{12}$, $a_{22}$, $a_{13}$, $a_{23}$ représentant respectivement les abscisses précédemment notées : $X_{A2}$, $X_{C1}$, $X_{B2}$, $X_{B1}$, $X_{C2}$, $X_{A1}$.

Pour déterminer l'image d'un point quelconque qui est sur la droite comprenant le dispositif électro-optique, on considère un point M sur la droite portant le capteur et ayant une abscisse $X_M$ connue sur ladite droite. L'image de M est à l'intersection des droites construites suivantes :

$$y \sin \Theta 1 - z \cos \Theta 1 = c_{1M} ;$$

$$y \sin \Theta 2 - z \cos \Theta 2 = c_{2M} ;$$

En utilisant, les six équations de droites précédentes, les coefficients $c_{1M}$ et $c_{2M}$ peuvent être exprimés de la manière suivante, pour i = 1 ou 2 :

$$c_{iM} = \frac{t_i \cdot c_{i2} \cdot (c_{i3} - c_{i1}) - c_{i1}(c_{i3} - c_{i2})}{t_i \cdot (c_{i3} - c_{i1}) - (c_{i3} - c_{i2})}, \text{ avec } t_i = \frac{(X_M - a_{i1}) \cdot (a_{i3} - a_{i2})}{(X_M - a_{i2}) \cdot (a_{i3} - a_{i1})} ;$$

Dans un premier cas, si $X_M = a_{i2}$, on a alors $c_{iM} = c_{i2}$ ;

On obtient alors les coordonnées du projeté $m(y_m, z_m)$ de M dans le plan image :

∎

$$y_M = \frac{c_{2M} \cdot \cos \theta_1 - c_{1M} \cdot \cos \theta_2}{\sin(\theta_2 - \theta_1)} ;$$

∎

$$z_M = \frac{c_{2M} \cdot \sin \theta_1 - c_{1M} \cdot \sin \theta_2}{\sin(\theta_2 - \theta_1)} .$$

Les positions des projections correspondantes A, B, I sur le plan image Pi, sont déterminées en remplaçant dans les équations précédentes, notamment l'équation de $t_i$, les abscisses $X_{A'}$, $X_{B'}$, $X_{I'}$ connues dans le référentiel du premier dispositif électro-optique de chacun des points A', B', I'.

On en déduit la position de points A, B et I dans le plan image. De la même manière, on trouve les coordonnées des points C, G et J dans le plan image.

L'invention ne se limite pas au choix des extrémités et du centre de chaque dispositif électro-optique, mais permet également un choix d'un triplet de points dont on connaît les abscisses relatives sur le dispositif électro-optique.

Par exemple, deux points P' et Q' et un troisième point R', tel que le rapport $\frac{P'Q'}{P'R'}$ est connu.

Enfin, il est nécessaire en plus de connaître, au moins une abscisse métrique d'un des points sur un dispositif électro-optique.

Nous appelons une abscisse métrique la distance réelle d'un point du capteur à un point d'origine lié au capteur, par exemple une de ses extrémités.

Nous appelons une abscisse relative, la distance comptée en pixel d'un point à un pixel de référence, par exemple le pixel correspondant à une extrémité du capteur.

Pour la détermination de l'orientation et de la position de la partie mobile, en ce qui concerne le second dispositif électro-optique, si une abscisse métrique d'un point est connue sur le premier dispositif, alors il n'est pas nécessaire d'en connaître une sur le second dispositif, sachant que l'orientation des deux dispositifs l'un par rapport à l'autre est connue par construction.

La disposition des capteurs entre eux étant connues, notamment leur position de l'un par rapport à l'autre, il n'est pas nécessaire de connaître la position métrique de chacun des six points recherchés sur les capteurs linéaires.

La position d'un seul point et les positions relatives des autres points à ce dernier point sont suffisantes pour déterminer la position des 5 autres points.

En pratique, et dans la majorité des cas les positions des six points recherchés, tels que A', B', I', G', C' et J', sont connus pour les applications de l'invention.

La description qui suit considère la connaissance des extrémités des dispositifs et de leur centre, mais les raisonnements qui suivent sont identiques avec la connaissance de trois abscisses relatives connues de chaque dispositif électro-optique et la connaissance d'une abscisse métrique d'au moins un point sur un des dispositifs électro-optique.

Si l'on considère la position du point de fuite E dans le plan image de la droite comprenant le premier dispositif électro-optique, la direction du premier dispositif électro-optique est donnée par la construction de la droite (OE).

De la même manière, si l'on considère la position du point de fuite F dans le plan image de la droite comprenant le second dispositif électro-optique, la direction du second dispositif électro-optique est donnée par la construction de la droite (OF).

Détermination des points E et F

Le calcul de la position des projections dans le plan image Pi des points de fuite des droites (A'B') et (C'G') exploite le fait que les deux faisceaux des quatre droites issues de O passant respectivement par les points A, I , B, E et par les points G, J, C, F sont tous deux des faisceaux harmoniques.

Les quatre droites coplanaires concourantes OA', OI', OB', OE forment un faisceau harmonique. Ce faisceau de droites détermine donc sur toute sécante quatre points en division harmonique, dont leur birapport est égal à -1. Par conséquent, l'égalité suivante : $\dfrac{BA}{BI} = \dfrac{EA}{EI}$, fournit la position du point de fuite E de la droite (A'B') sur la droite (AB).

De la même manière, les quatre droites coplanaires concourantes OC', OJ', OG', OF forment un faisceau harmonique. Ce faisceau de droites détermine donc sur toute sécante quatre points en division harmonique, dont leur birapport est égal à -1. Par conséquent, l'égalité suivante : $\dfrac{CG}{CJ} = \dfrac{FG}{FJ}$, fournit la position du point de fuite F de la droite (C'G') sur la droite (CG).

En particulier, les directions joignant le centre de projection O aux points de fuite E et F sur le plan Pi donnent les directions des dispositifs électro-optiques A'B' et G'C'.

Détermination des composantes du mouvement.

Tout mouvement subit par la partie mobile dans l'espace peut se décomposer en une translation et une rotation de l'espace.

Si on note A', B', C' et G' les images des points $A_0$, $B_0$, $C_0$ et $G_0$ après la rotation et la translation subi par l'objet mobile, en notant $\vec{t}$, la translation, et r, la rotation, on obtient les relations suivantes :

$$\overrightarrow{OA'} = \vec{t} + r(\overrightarrow{OA_0}) \; ;$$

$$\overrightarrow{OB'} = \vec{t} + r(\overrightarrow{OB_0}) \; ;$$

$$\overrightarrow{OC'} = \vec{t} + r(\overrightarrow{OC_0}) \; ;$$

$$\overrightarrow{OG'} = \vec{t} + r(\overrightarrow{OG_0}) \; ;$$

où O est l'origine du repère.

Les vecteurs formés par les extrémités des dispositifs électro-optiques deviennent :

$$\overrightarrow{A'B'} = r(\overrightarrow{A_0B_0}) \ ;$$

$$\overrightarrow{C'G'} = r(\overrightarrow{C_0G_0}) .$$

On en déduit que $\overrightarrow{G'C} = G_0C_0 [\cos \alpha \cdot r(\vec{j}) - \sin a \cdot r(\vec{k})]$

Le procédé rappelé dans la description des figures 2 et 3 ainsi que son application pour déterminer les projetés dans le plan image de la partie fixe d'un point de fuite d'une droite dans l'espace, nous permet de trouver des vecteurs $\vec{E}$ et $\vec{F}$, tel que :

    o $\vec{E}$ est non nul et positivement proportionnel à $\overrightarrow{A'B'}$ ;
    o $\vec{F}$ est non nul et positivement proportionnel à $\overrightarrow{G'C'}$.

Il est alors possible de définir les deux vecteurs normalisés $\vec{e}$ et $\vec{f}$, tel que :

$$\vec{e} = \frac{\vec{E}}{\left\|\overrightarrow{E}\right\|} \ ;$$

$$\vec{f} = \frac{\vec{F}}{\left\|\overrightarrow{F}\right\|} .$$

On obtient donc les relations suivantes :

$$\vec{e} = \frac{\overrightarrow{A'B'}}{A'B'} \ ;$$

$$\vec{f} = \frac{\overrightarrow{G'C'}}{G'C'} .$$

On obtient la détermination de la rotation r où $\alpha$ est non nul par construction, car les deux dispositif électro-optique linéaire sont positionnés sur la partie mobile de manière à former un angle fixe et invariant entre eux.

$$r(\vec{j}) = -\frac{\vec{e}}{\left\|\vec{e}\right\|} \ ;$$

$$r(\vec{k}) = \frac{1}{\tan \alpha} r(\vec{j}) - \frac{1}{\sin \alpha} \frac{\vec{f}}{\left\|\vec{f}\right\|} \ ;$$

$$r(\vec{i}) = r(\vec{j}) \wedge r(\vec{k}) \ ;$$

Et la détermination de la translation :

Avec $\overrightarrow{OA'} = \vec{t} + r(\overrightarrow{OA_0})$

Si on appelle $\mu_E$ le réel connu tel que $\overrightarrow{AE} = \mu_E \overrightarrow{AB}$, et k le réel tel que $\overrightarrow{OA'} = k\overrightarrow{OA}$, on a alors :

$$ k = \frac{A'B'}{OE} \left| \mu_E - 1 \right| $$

La translation recherchée est $\vec{t} = k\overrightarrow{OA} - r(\overrightarrow{OA_0})$, où OA est connu après la détermination de la position de A dans le plan image.

Par conséquent, la détermination du mouvement de la partie mobile est entièrement déterminée dans l'espace et exprimée dans le repère (O, i, j, k).

Le principal avantage de l'invention est de supprimer la condition de position relative des dispositifs électro-optiques entre eux. La seule connaissance de leur orientation relative est nécessaire.

Par ailleurs, l'invention présente l'avantage de relâcher des contraintes de précision mécanique quand à la disposition des capteurs, et donc permettent de reporter le problème de tolérancement mécanique à une question d'installation sur le casque.

Par ailleurs, en comparaison d'un capteur étendu, du type de forme carrée, le dispositif à deux capteurs coplanaires dont les directions sont sécantes permet :

■ de relâcher les contraintes d'installation sur un casque ;

■ d'envisager de monter des capteurs plus gros et donc d'améliorer la précision de mesure du système, en effet la taille du capteur est un élément important de la précision du système. Dans le cas d'un capteur linéaire, il est possible de doubler la taille du capteur sur un casque ;

■ de disposer de capteurs qui ont très peu de sensibilité à la dilatation et donc à la température ambiante. Le capteur étant linéaire, sa dilatation ne transforme pas son vecteur directeur associé et a donc un impact nul sur la mesure d'attitude réalisée, en revanche elle peut avoir un impact sur la mesure de position.

Enfin, la puissance de calcul nécessaire est réduite par rapport à une approche par capteurs à CCD linéaires parallèles puisque la présente invention permet de calculer facilement les points de fuite liés aux vecteurs directeurs au lieu d'avoir à le déterminer par intersection de points virtuels. Le calcul de la position des points de fuite nécessite un calcul de la conservation d'un rapport homothétique.

## Revendications

1. Système électro-optique de détermination de position et d'orientation d'une partie mobile, ledit système comprenant une partie fixe comprenant des moyens de projections (30) et ayant un centre de projection (O) et une partie mobile, la partie fixe étant liée solidairement à un plan image virtuel (Pi), la partie mobile étant liée solidairement à au-moins deux dispositifs électro-optiques linéaires (A'B', C'G'), les moyens de projection (30) projetant dans une zone comprenant les dispositifs électro-optiques (A'B', C'G'), au moins deux réseaux de faisceaux, dont l'intersection avec le plan image (Pi) définit au moins deux réseaux de droites non parallèles, chacun des réseaux de droites comprenant au moins trois segments parallèles, chacun des dispositifs électro-optique (A'B', C'G') étant intercepté en au moins deux triplets de points, **caractérisé en ce que** les deux dispositifs électro-optiques (A'B', C'G') étant coplanaires et leur direction sécante, l'orientation et la position de la partie mobile est déterminée en fonction de points de fuite (E, F) dans le plan image (Pi) des deux droites comprenant respectivement le premier (A'B') et le second (C'G') dispositifs électro-optiques, des moyens de calcul permettant, à partir des points d'intersections des faisceaux sur les dispositifs électro-optiques (A'B', C'G'), de déterminer les positions :

   ▪ des projections (A, I, B) sur le plan image (Pi) du premier triplet de points (A', I', B') comprenant les extrémités et le milieu du premier dispositif, à partir de la conservation de bi-rapports selon une projection centrale dans le plan du premier dispositif et dans le plan image (Pi), lesdites projections respectives étant des points d'intersection, avec le plan image (Pi), d'un faisceau de droites issues du centre de projection (O) et passant par le premier triplet (A', B', I') de points,

   ▪ des projections (C, J, G) sur le plan image (Pi) du second triplet de points (C', J', G') comprenant les extrémités et le milieu du second dispositif (C'G') à partir de la conservation de bi-rapports selon une projection centrale dans le plan du second dispositif et dans le plan image (Pi), lesdites projections respectives étant des points d'intersection, avec le plan image (Pi), d'un faisceau de droites issues du centre de projection (O) et passant par le second triplet (C' J' G') de points, et

- des positions dans le plan image (Pi) d'un premier (E) point de fuite d'une droite comprenant le premier dispositif (A'B') et d'un deuxième (F) point de fuite d'une droite comprenant le deuxième dispositif (C'G') en se basant sur le fait qu'un faisceau de quatre droites issues du centre de projection (O) et passant par les projections (A, I, B) sur le plan image (Pi) du premier triplet de points (A' I' B') et par le premier point de fuite (E) et qu'un faisceau de quatre droites issues du centre de projection (O) et passant par les projections (A' I' B') sur le plan image (Pi) du second triplet de points (C' I' G') et par le second point de fuite (F) sont des faisceaux harmoniques.

2. Système électro-optique de détermination de position et d'orientation d'une partie mobile comprenant des moyens de détermination d'au moins une direction de ladite partie mobile selon la revendication 1, **caractérisé en ce que** le premier réseau intercepte le premier dispositif électro-optique en trois points ($A_1$, $B_1$, $C_1$) et le second réseau intercepte le dispositif électro-optique en trois autres points ($A_2$, $B_2$, $C_2$), les deux réseaux faisant un angle entre eux de telle manière que la forme des deux réseaux représente une ligne brisée formant au moins trois dents de scie.

3. Système électro-optique de détermination de position et d'orientation d'une partie mobile comprenant des moyens de détermination d'au moins une direction de ladite partie mobile selon la revendication 1, **caractérisé en ce que** le système projette successivement deux mires, dont la projection comprend respectivement un premier et un second réseau ayant les mêmes caractéristiques dont l'orientation du second réseau par rapport au premier réseau forme un angle déterminé, les réseaux ayant une taille suffisante pour couvrir la zone de débattement du capteur et comprenant un nombre déterminé de segments parallèles, dont les birapports de quatre points d'intersection consécutifs avec une droite sécante sont tous différents.

4. Système électro-optique de détermination de position et d'orientation d'une partie mobile selon l'une des revendications 2 à 3, **caractérisé en ce que** le premier triplet de points (A' I' B') comprend les extrémités et le centre du premier dispositif électro-optique (A' B') et que le second triplet de points (C' J' G') comprend les extrémités et le centre du second dispositif électro-optique (C' G').

5. Système électro-optique de détermination de l'attitude d'une partie mobile comprenant des moyens de détermination d'au moins une direction de ladite partie mobile selon l'une des revendications 2 à 4, **caractérisée en ce que** les dispositifs électro-optiques sont des barrettes de photo détection.

6. Système électro-optique de détermination de position et d'orientation d'une partie mobile comprenant des moyens de détermination d'au moins une direction de ladite partie mobile selon l'une des revendications 2 à 8, **caractérisée en ce que** les dispositifs électro-optiques (A'B', C' G') sont des capteurs linéaires CCD, la partie fixe est un projecteur d'images animées et l'objet mobile est un casque de pilote.

7. Système électro-optique de détermination de la position d'une partie mobile selon la revendication 6, **caractérisée en ce que** la translation t dans un repère fixe (O, i, j, k) est déterminée par la relation :

$$\vec{t} = k\overrightarrow{OA} - r(\overrightarrow{OA_0}),$$ où O est le point de référence de la partie fixe, A le projeté, par projection de centre O, dans le plan image d'un point A' connu par mesure du premier dispositif électro-optique dont la position initiale connue est notée $A_0$ et k s'exprimant de la manière suivante :

$$k = \left| \mu - 1 \right| \frac{A'B'}{OE},$$ où E est le premier point de fuite, par projection de centre 0 sur le plan image, de la direction du premier dispositif électro-optique et B' est un second point connu par mesure du premier dispositif électro-optique linéaire dont la projection calculée est B, $\mu$ est un réel s'exprimant de la manière suivante :

$$\overrightarrow{AE} = \mu\overrightarrow{AB}.$$

8. Système électro-optique de détermination de l'orientation d'une partie mobile selon la revendication 7, **caractérisée en ce que** la rotation r dans un repère fixe (O, i, j, k) est déterminée par les relations :

$$r(\vec{j}) = -\frac{\vec{e}}{\|\vec{e}\|} \ ;$$

$$r(\vec{k}) = \frac{1}{\tan\alpha}\, r(\vec{j}) - \frac{1}{\sin\alpha}\frac{\vec{f}}{\|\vec{f}\|} \ ;$$

$$r(\vec{i}) = r(\vec{j}) \wedge r(\vec{k}) \ ;$$

où $\vec{e}$ est le vecteur unitaire ayant pour orientation $\overrightarrow{OE}$, où E est le premier point de fuite de la direction du premier dispositif électro-optique ;
où $\alpha$ est l'angle formé entre les deux dispositifs électro-optiques sur la partie mobile, et ;
où $\vec{f}$ est le vecteur unitaire ayant pour orientation $\overrightarrow{OF}$, où F le deuxième point de fuite de la direction du second dispositif électro-optique.

**Patentansprüche**

1. Elektrooptisches System zum Ermitteln der Position und Ausrichtung eines beweglichen Teils, wobei das System einen festen Teil, der Projektionsmittel (30) umfasst und ein Projektionszentrum (O) aufweist, und einen beweglichen Teil umfasst, wobei der feste Teil einstückig mit einer virtuellen Bildebene (Pi) verbunden ist, wobei der bewegliche Teil einstückig mit wenigstens zwei linearen elektrooptischen Vorrichtungen (A'B', C'G') verbunden ist, wobei die Projektionsmittel (30) in eine Zone projizieren, die die elektrooptischen Vorrichtungen (A'B', C'G') umfasst, wobei wenigstens zwei Strahlennetzwerke, deren Schnittpunkt mit der Bildebene (Pi) wenigstens zwei nicht parallele Netzwerke von Geraden definiert, wobei jedes der Netzwerke von Geraden wenigstens drei parallele Segmente umfasst, wobei jede der elektrooptischen Vorrichtungen (A'B', C'G') in wenigstens drei Punktetripletts erfasst wird, **dadurch gekennzeichnet, dass**, da die beiden elektrooptischen Vorrichtungen (A'B', C'G') koplanar sind und ihre Richtung eine Sekante ist, die Ausrichtung und die Position des beweglichen Teils in Abhängigkeit von Fluchtpunkten (E, F) in der Bildebene (Pi) von zwei Geraden bestimmt wird, die jeweils die erste (A'B') und die zweite (C'G') elektrooptische Vorrichtung umfassen, wobei mit Rechenmitteln auf der Basis von Schnittpunkten der Strahlen auf den elektrooptischen Vorrichtungen (A'B', C'G') die Positionen ermittelt werden können von:

   • Projektionen (A, I, B) auf der Bildebene (Pi) des ersten Punktetriplett (A', I', B'), das die Enden und die Mitte der ersten Vorrichtung umfasst, anhand der Erhaltung von Doppelverhältnissen gemäß einer zentralen Projektion in der Ebene der ersten Vorrichtung und in der Bildebene (Pi), wobei die jeweiligen Projektionen Schnittpunkte mit der Bildebene (Pi) eines Strahls von Geraden sind, die vom Projektionszentrum (O) ausgehen und durch das erste Punktetriplett (A', B', I') verlaufen,
   • Projektionen (C, J, G) auf der Bildebene (Pi) des zweiten Punktetripletts (C', J', G'), das die Enden und die Mitte der zweiten Vorrichtung (C'G') umfasst, auf der Basis der Erhaltung von Doppelverhältnissen gemäß einer zentralen Projektion in der Ebene der zweiten Vorrichtung und in der Bildebene (Pi), wobei die jeweiligen Projektionen Schnittpunkte mit der Bildebene (Pi) eines Strahls von Geraden sind, die vom Projektionszentrum (O) ausgehen und durch das zweite Punktetriplett (C' J' G') verlaufen, und
   • Positionen in der Bildebene (Pi) eines ersten (E) Fluchtpunkts einer Geraden, die die erste Vorrichtung (A'B') umfasst, und eines zweiten Fluchtpunkts (F) einer Geraden, die die zweite Vorrichtung (C'G') umfasst, basierend auf der Tatsache, dass ein Strahl von vier Geraden, die vom Projektionszentrum (O) ausgehen und durch die Projektionen (A, I, B) auf der Bildebene (Pi) des ersten Punktetripletts (A' I' B') und durch den ersten Fluchtpunkt (E) verlaufen, und dass ein Strahl von vier Geraden, die vom Projektionszentrum (O) ausgehen und durch die Projektionen (A' I' B') auf der Bildebene (Pi) des zweiten Punktetripletts (C' I' G') und durch den zweiten Fluchtpunkt (F) verlaufen, harmonische Strahlen sind.

2. Elektrooptisches System zum Ermitteln der Position und Ausrichtung eines beweglichen Teils, umfassend Mittel zum Ermitteln von wenigstens einer Richtung des beweglichen Teils gemäß Anspruch 1, **dadurch gekennzeichnet,**

**dass** das erste Netzwerk die erste elektrooptische Vorrichtung in drei Punkten ($A_1$, $B_1$, $C_1$) erfasst und das zweite Netzwerk die elektrooptische Vorrichtung in drei weiteren Punkten ($A_2$, $B_2$, $C_2$) erfasst, wobei die beiden Netzwerke einen Winkel zwischen sich bilden, so dass die Form der beiden Netzwerke eine gestrichelte Linie repräsentiert, die wenigstens drei Sägezähne bildet.

3.  Elektrooptisches System zum Ermitteln der Position und Ausrichtung eines beweglichen Teils, umfassend Mittel zum Ermitteln von wenigstens einer Richtung des beweglichen Teils gemäß Anspruch 1, **dadurch gekennzeichnet, dass** das System nacheinander durch zwei Testmuster projiziert, deren Projektion jeweils ein erstes und ein zweites Netzwerk mit denselben Charakteristiken umfasst, wobei die Ausrichtung des zweiten Netzwerks in Bezug auf das erste Netzwerk einen bestimmten Winkel bildet, wobei die Netzwerke eine Größe haben, die ausreicht, um die Ausschlagzone des Sensors abzudecken, und eine bestimmte Anzahl von parallelen Segmenten umfasst, deren Doppelverhältnisse von vier aufeinander folgenden Schnittpunkten mit einer Sekantengeraden alle unterschiedlich sind.

4.  Elektrooptisches System zum Ermitteln der Position und Ausrichtung eines beweglichen Teils nach einem der Ansprüche 2 bis 3, **dadurch gekennzeichnet, dass** das erste Punktetriplett (A' I' B') die Enden und die Mitte der ersten elektrooptischen Vorrichtung (A' B') umfasst, und dadurch, dass das zweite Punktetriplett (C', J', G') die Enden und die Mitte der zweiten elektrooptischen Vorrichtung (C' G') umfasst.

5.  Elektrooptisches System zum Ermitteln der Lage eines beweglichen Teils, umfassend Mittel zum Ermitteln von wenigstens einer Richtung des beweglichen Teils nach einem der Ansprüche 2 bis 4, **dadurch gekennzeichnet, dass** die elektrooptischen Vorrichtungen Fotodetektionsleisten sind.

6.  Elektrooptisches System zum Ermitteln der Position und Ausrichtung eines beweglichen Teils, umfassend Mittel zum Ermitteln von wenigstens einer Richtung des beweglichen Teils nach einem der Ansprüche 2 bis 8, **dadurch gekennzeichnet, dass** die elektrooptischen Vorrichtungen (A' B', C' G') lineare CCD-Sensoren sind, wobei der feste Teil ein Bewegtbild-Projektor und der bewegliche Teil ein Pilotenhelm ist.

7.  Elektrooptisches System zum Ermitteln der Position eines beweglichen Teils nach Anspruch 6, **dadurch gekennzeichnet, dass** die Translation t in einem festen Bezugssystem (O, i, j, k) durch die folgende Beziehung ermittelt wird:

    $\vec{t}=k\overrightarrow{OA}-r(\overrightarrow{OA_0})$, wobei O der Referenzpunkt des festen Teils ist, A die Projizierende durch das Projektionszentrum O in der Bildebene eines Punktes A' ist, der durch Messen der ersten elektrooptischen Vorrichtung bekannt ist, deren bekannte Anfangsposition mit $A_0$ bezeichnet ist, und k in der folgenden Weise ausgedrückt wird:

    $$k=\left|\ \mu-1\ \right|\frac{A'B'}{OE}$$ wobei E der erste Fluchtpunkt, durch das Projektionszentrum 0 auf der Bildebene, der Richtung der ersten elektrooptischen Vorrichtung und B' ein zweiter Punkt ist, bekannt durch Messen der ersten linearen elektrooptischen Vorrichtung, deren berechnete Projektion B ist, $\mu$ eine reelle Zahl ist, die auf die folgende Weise ausgedrückt wird:

    $$\overrightarrow{AE}=\mu\overrightarrow{AB}.$$

8.  Elektrooptisches System zum Ermitteln der Ausrichtung eines beweglichen Teils nach Anspruch 7, **dadurch gekennzeichnet, dass** die Rotation r in einem festen Bezugssystem (O, i, j, k) durch die folgenden Relationen ermittelt wird:

    $$r(\vec{j})=-\frac{\vec{e}}{\|\vec{e}\|}\ ;$$

    $$r(\vec{k})=\frac{1}{\tan\alpha}r(\vec{j})-\frac{1}{\sin\alpha}\frac{\vec{f}}{\|\vec{f}\|}\ ;$$

$$r(\vec{i}) = r(\vec{j}) \wedge r(\vec{k}) \; ;$$

wobei $\vec{e}$ der Einheitsvektor mit der Ausrichtung $\overrightarrow{OE}$ ist, wobei E der erste Fluchtpunkt der Richtung der ersten elektrooptischen Vorrichtung ist;
wobei $\alpha$ der Winkel ist, der zwischen den beiden elektrooptischen Vorrichtungen auf dem beweglichen Teil gebildet wird, und
wobei $\vec{f}$ der Einheitsvektor mit der Ausrichtung $\overrightarrow{OF}$ ist, wobei F der zweite Fluchtpunkt der Richtung der zweiten elektrooptischen Vorrichtung ist.

**Claims**

1. Electro-optical system for determining the position and orientation of a movable portion, the system comprising a fixed portion which comprises projection means (30) and which has a projection centre (O) and a movable portion, the fixed portion being fixedly connected to a virtual image plane (Pi), the movable portion being fixedly connected to at least two linear electro-optical devices (A'B', C'G'), the projection means (30) projecting into a zone which comprises the electro-optical devices (A'B', C'G'), at least two beam networks, whose intersection with the image plane (Pi) defines at least two networks of non-parallel straight lines, each of the networks of straight lines comprising at least three parallel segments, each of the electro-optical devices (A'B', C'G') being intercepted at least at two triplets of locations, **characterised in that**, since the two electro-optical devices (A'B', C'G') are coplanar and their direction intersects, the orientation and the position of the movable portion is determined in accordance with vanishing points (E, F) in the image plane (Pi) of the two straight lines which comprise the first electro-optical device (A'B') and the second electro-optical device (C'G'), respectively, calculation means allowing, on the basis of the intersection locations of the beams at the electro-optical devices (A'B', C'G'), the determination of the positions:

   • of the projections (A, I, B) on the image plane (Pi) of the first triplet of locations (A', I', B') comprising the ends and the centre of the first device, on the basis of the preservation of double ratios according to a central projection in the plane of the first device and in the image plane (Pi), the respective projections being intersection locations, with the image plane (Pi), of a bundle of straight lines originating from the centre of projection (O) and extending through the first triplet (A', B', I') of locations,
   • of the projections (C, J, G) on the image plane (Pi) of the second triplet of locations (C', J', G') comprising the ends and the centre of the second device (C'G') on the basis of the preservation of double ratios in accordance with a central projection in the plane of the second device and in the image plane (Pi), the respective projections being intersection locations with the image plane (Pi) of a bundle of straight lines originating from the centre of projection (O) and extending through the second triplet (C' J' G') of locations, and
   • of the positions in the image plane (Pi) of a first vanishing point (E) of a straight line which comprises the first device (A'B') and a second vanishing point (F) of a straight line which comprises the second device (C'G') based on the fact that a bundle of four straight lines which originate from the centre of projection (O) and which extend through the projections (A, I, B) on the image plane (Pi) of the first triplet of locations (A' I' B') and through the first vanishing point (E), and a bundle of four straight lines originating from the centre of projection (O) and extending through the projections (A' I' B') on the image plane (Pi) of the second triplet of locations (C' I' G') and through the second vanishing point (F) are harmonic bundles.

2. Electro-optical system for determining the position and orientation of a movable portion comprising means for determining at least one direction of the movable portion in accordance with claim 1, **characterised in that** the first network intercepts the first electro-optical device at three locations ($A_1$, $B_1$, $C_1$) and the second network intercepts the electro-optical device at three other locations $A_2$ $B_2$, $C_2$), the two networks forming an angle between them in such a manner that the shape of the two networks represents a broken line which forms at least three saw teeth.

3. Electro-optical system for determining the position and orientation of a movable portion comprising means for determining at least one direction of the movable portion in accordance with claim 1, **characterised in that** the system successively projects two optical test patterns, whose projection comprises a first and a second network, respectively, which have the same characteristics and whose orientation of the second network relative to the first network forms a predetermined angle, the networks being of sufficient size to cover the travel zone of the sensor and comprising a predetermined number of parallel segments whose double ratios of four consecutive intersection locations with an intersecting straight line are all different.

4. Electro-optical system for determining the position and orientation of a movable portion according to either of claims 2 or 3, **characterised in that** the first triplet of locations (A' I' B') comprises the ends and the centre of the first electro-optical device (A' B') and **in that** the second triplet of locations (C' J' G') comprises the ends and the centre of the second electro-optical device (C' G').

5. Electro-optical system for determining the attitude of a movable portion comprising means for determining at least one direction of the movable portion according to any one of claims 2 to 4, **characterised in that** the electro-optical devices are photodetection bars.

6. Electro-optical system for determining the position and orientation of a movable portion comprising means for determining at least one direction of the movable portion according to any one of claims 2 to 8, **characterised in that** the electro-optical devices (A' B', C' G') are linear CCD sensors, the fixed portion is a projector of animated images and the movable object is a pilot's helmet.

7. Electro-optical system for determining the position of a movable portion according to claim 6, **characterised in that** the translation t to a fixed reference system (O, i, j, k) is determined by the relationship:

$\vec{t} = k\overrightarrow{OA} - r(\overrightarrow{OA_0})$, where O is the reference location of the fixed portion, A the projected member, by means of centre projection O, in the image plane of a location A' which is known by a measure of the first electro-optical device and whose initial known position is designated $A_0$ and $k$ being expressed in the following manner:

$k = \left| \mu - 1 \right| \dfrac{A'B'}{OE}$, where E is the first vanishing point, by means of centre projection O on the image plane, of the direction of the first electro-optical device and B' is a second location which is known by a measure of the first linear electro-optical device and whose calculated projection is B, $\mu$ is a real number expressed in the following manner:

$\overrightarrow{AE} = \mu\overrightarrow{AB}.$

8. Electro-optical system for determining the orientation of a movable portion according to claim 7, **characterised in that** the rotation r in a fixed reference system (O, i, j, k) is determined by the relationships:

$$r(\vec{j}) = -\frac{\vec{e}}{\|\vec{e}\|} \ ;$$

$$r(\vec{k}) = \frac{1}{\tan\alpha} r(\vec{j}) - \frac{1}{\sin\alpha}\frac{\vec{f}}{\|\vec{f}\|} \ ;$$

$$r(\vec{i}) = r(\vec{j}) \wedge r(\vec{k}) \ ;$$

where $\vec{e}$ is the unitary vector which has an orientation $\overrightarrow{OE}$, where E is the first vanishing point of the direction of the first electro-optical device;
where $\alpha$ is the angle formed between the two electro-optical devices on the movable portion, and;
where $\vec{f}$ is the unitary vector which has an orientation $\overrightarrow{OF}$, where F is the second vanishing point of the direction of the second electro-optical device.

FIG. 1

FIG.2

FIG.3

22

FIG. 4

FIG. 5

**EP 2 169 421 B1**

## RÉFÉRENCES CITÉES DANS LA DESCRIPTION

### Documents brevets cités dans la description

- FR 2905455
- FR 0706132
- FR 2905456